# EUROPÄISCHE PATENTANMELDUNG

(11) **EP 1 842 413 A1**
(43) Veröffentlichungstag der Anmeldung: **10.10.2007**
(21) Anmeldenummer: 07006490.2
(22) Anmeldetag: 29.03.2007
(51) Int. Cl.: A01C 7/04

(54) **Pneumatische Einzelkornsämaschine**

(30) Priorität: 06.07.2006 DE 102006031272; 05.04.2006 DE 102006015951
(71) Anmelder: Amazonen-Werke H. Dreyer GmbH & Co. KG, 49205 Hasbergen (DE)
(72) Erfinder: Johannaber, Stefan Jan, 49536 Lienen (DE); Götzen, Nils, 49078 Osnabrück (DE); Wiebusch, Thorsten, 49205 Hasbergen (DE)

(57) **Zusammenfassung**

Pneumatische Einzelkornsämaschine mit einem Saatgutvorratsbehälter (1) und zumindest einer drehbar angeordneten Vereinzelungstrommel (3), in deren Umfangsfläche kreisförmig angeordnete Perforationsreihen angebracht sind, einem Gebläse, mittels welchem eine Druckdifferenz zwischen dem Innenraum der Vereinzelungstrommel (3) und dem Außenbereich der Vereinzelungstrommel (3) erzeugbar ist, so dass, wenn die Vereinzelungstrommel (3) durch den Saatgutvorrat geführt wird, sich an den Perforationen der perforierten Trommel Samenkörner anlagern, wobei der Saatgutvorratsbehälter (1) zwei von einander beabstandete Seitenwände aufweist, die sich parallel zur Bewegungsrichtung der Trommel erstrecken und mit der Trommel zumindest annähernd abdichtend zusammenwirken, wobei die Vereinzelungstrommel (3) gegenüber der Trommeloberfläche im Bereich der Perforationsreihen erhöht ringförmig umlaufende Vereinzelungsgürtel (4) aufweist, wobei die Vereinzelungsgürtel (4) im Querschnitt dachförmig ausgebildet sind und in beiden Seitendachflächen die Perforationslöcher angeordnet sind, wobei von den Perforationslöchern der Trommel zur Ablageeinrichtung führende Ausbringleitungen (17,24,25) vorgesehen sind. Um, ein verbessertes Auffangen und Einleiten der Saatkörner in die Ausbringleitung (17,24,25) vorzuschlagen, ist vorgesehen , dass der Eingangsbereich (19,23) der Ausbringleitungen (17,24,25) trichterförmig und/oder Y-förmig ausgebildet ist, dass die trichterförmigen und/oder Y-förmigen Eingangsbereiche (19,23) zwischen den Vereinzelungsgürteln (4) angeordnet sind und zwar derart, dass sie jeweils die sich von den Perforationen der einander gegenüberliegenden Seitenflächen benachbarter Vereinzelungsgürtel (4) lösenden vereinzelten Samenkörner auffangen und in die jeweilige und/oder gemeinsame Ausbringleitung (17,24,25) übergeben.

## Beschreibung

Die Erfindung betrifft eine pneumatische Einzelkornsämaschine gemäß des Oberbegriffes des Patentanspruches 1.

Eine derartige Einzelkornsämaschine ist in der nicht vorveröffentlichten deutschen Patentanmeldung 10 2005 038 155.3 beschrieben. Bei dieser Einzelkornsämaschine ist jeweils den Perforationsreihen eines Vereinzelungsgürtels eine von der Vereinzelungstrommel der Ablageeinrichtung der Einzelkornsämaschine führende Ausbringleitung zugeordnet.

Der Erfindung liegt die Aufgabe zugrunde, ein verbessertes Auffangen und Einleiten der Saatkörner in die Ausbringleitung vorzuschlagen.

Diese Aufgabe wird erfindungemäß durch die kennzeichnenden Merkmale des Patentanspruches 1 gelöst. Infolge dieser Maßnahmen sind die Eingangsbereiche der Ausbringleitungen in die Ablöse- und Abflugrichtung der sich von den Perforationen lösenden vereinzelten Körner ausgerichtet, so dass die Saatkörner ungehindert in die Eingangsöffnung, ohne zumindest wesentlich an die Wandungen der Eingangsbereiche der Ausbringleitungen anzustoßen, von dem in den Ausbringleitungen herrschenden Luftstrom mitgerissen und zu den Ablageeinrichtungen der Einzelkornsämaschinen gefördert werden. Durch diese erfindungsgemäße Ausgestaltung der Eingangsbereiche der Ausbringleitungen ergibt sich im Eingangsbereich eine hohe Strömungsgeschwindigkeit, so dass die Saatkörner sicher vom Luftstrom in der Leitung mitgerissen werden.

Um die Saatkörner sicher nach dem Ablösen von den Perforationen der einander benachbarten Seitenflächen der Vereinzelungsgürtel, durch die Eingangsbereiche der Leitungen vorteilhaft aufgefangen werden können, ist vorgesehen, dass die trichterförmigen Eingangsbereiche als Eingangstrichter ausgebildet sind. Eine Vorteilhafte Ausgestaltung des Eingangsbereiches der Ausbringleitungen lässt sich dadurch erreichen, dass in dem Eingangsbereich der Eingangstrichter ein die Eingangstrichter in ein Y-förmiges oder hosenartiges Leitungselement aufteilendes Wandstück angeordnet ist, dass dieses Leitungsstück sich zu einer gemeinsamen Leitung vereinigt und/oder in eine gemeinsame Leitung einmündet. Infolge dieser Maßnahmen werden die beiden Eingangsbereiche der jeweils einer Perforationsreihe zugeordneten Eingangsbereiche des Eingangstrichters vorteilhaft mit einem kleinen Eingangsquerschnitt ausgestaltet, wobei eine hohe Strömungsgeschwindigkeit auch bereits im Eingangsbereich, ohne dass es zu einem zu hohen Staudruck kommt, erreicht wird.

Ein sicheres Auffangen der sich von den Perforationen der Vereinzelungsgürtel lösenden Samenkörner lässt sich dadurch verbessern, dass die Eingangstrichter der Ausbringleitungen zumindest annähernd bis an die Seitenflächen der Vereinzelungsgürtel heranreichen.

Eine vorteilhafte Ausrichtung der Wände des Eingangstrichters lässt sich dadurch erreichen, dass die Ausrichtung der Wände der Eingangstrichter an die Abflugrichtung der Samenkörner von den Perforationen in Richtung der Ausbringleitungen angepasst ist.

Eine vorteilhafte Montage des Eingangsbereiches der Ausbringleitung an die eigentliche Ausbringleitung wird dadurch erreicht, dass an dem eingangstrichter-, hosen- und/oder Y-artigen Leitungsstück die Ausbringleitung angeschlossen ist.

Um ein gleichmäßiges Einleiten der vereinzelten Saatkörner in die jeweilige Ausbringleitung und eine gleichmäßige Ablage des Saatgutes im Boden zu erreichen ist vorgesehen, dass die einander gegenüberliegenden Seitenflächen benachbarter Vereinzelungsgürtel angeordneten Perforationslöcher versetzt zueinander angeordnet sind.

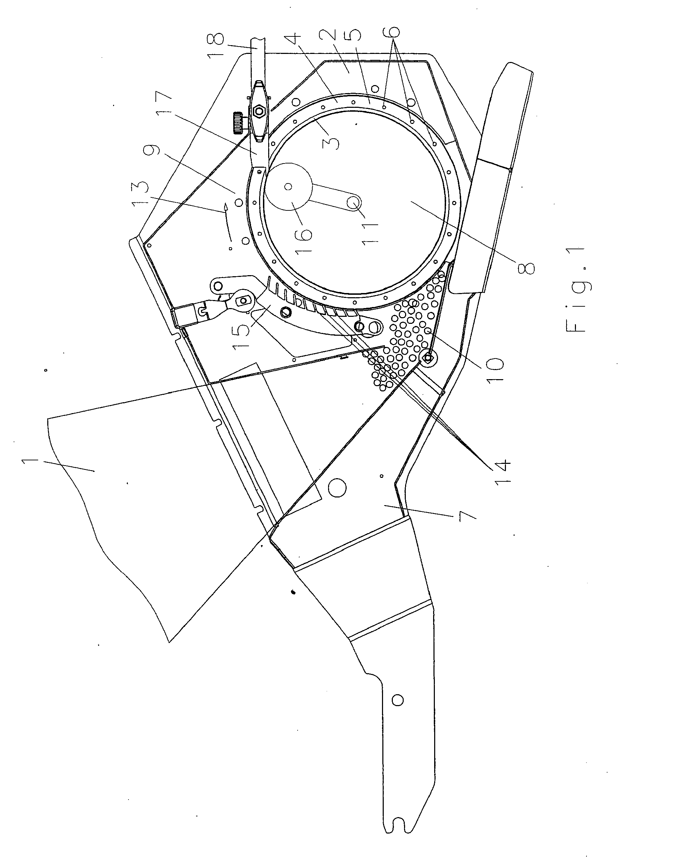

Weitere Einzelheiten der Erfindung sind der Beispielsbeschreibung und den Zeichnungen zu entnehmen. Hierbei zeigen
- Fig. 1: die Vereinzelungsvorrichtung der Einzelkornsämaschine in vereinfachter ausschnittsweiser Darstellung in Seitenansicht,
- Fig. 2: die Vereinzelungsvorrichtung in der Draufsicht,
- Fig. 3: die Zuordnung der Ausbringleitung zu der Vereinzelungstrommel in Draufsicht, ausschnittsweise und vergrößerter Darstellung,
- Fig. 4: der Eingangsbereich der Ausbringleitung in perspektivischer Darstellung,
- Fig. 5: der Eingangsbereich der Ausbringleitung in der Ansicht V-V,
- Fig. 6: der Eingangsbereich der Ausbringleitung in Seitenansicht,
- Fig. 7: die Vereinzelungsvorrichtung in der Draufsicht mit anders angeordneten Ausbringleitungen und
- Fig. 8: die Anordnung des Eingangsbereichs der Ausbringleitung gemäß Fig. 7.

Die Sämaschine weist den Vorratsbehälter 1 und die unterhalb des Vorratsbehälters 1 in einem Gehäuse 2 drehbar angeordnete und rotierend angetriebene Vereinzelungstrommel 3 auf. Auf der Umfangsfläche der Vereinzelungstrommel 3 sind kreisförmig angeordnete Vereinzelungsgürtel 4 mit in den dachförmigen Seitenflächen 5 der Vereinzelungsgürtel in Perforationsreihen angeordneten Perforationen 6 angeordnet. Die Vereinzelungsgürtel 4 der Vereinzelungstrommel 3 sind im Querschnitt dachförmig ausgebildet und in den Seitendachflächen 5 sind jeweils die Perforationslöcher 6 der Perforationsreihen angeordnet. Der Vorratsbehälter 1 und das Gehäuse 2 oberhalb der Trommel 3 sind zumindest annähernd druckdicht mittels eines nicht dargestellten Deckels verschlossen. Über den Luftanschlusskasten 7 ist der Vorratsbehälter 1 und das Gehäuse 2 oberhalb der Trommel 3 durch das an den Anschlusskasten 7 angeschlossene und nicht dargestellte Druckluftgebläse mit Druckluft beaufschlagbar, so dass die Perforationsreihen 6 mit einer Druckdifferenz zwischen dem Innenraum 8 der Vereinzelungstrommel 3 und dem Außenbereich 9 der Vereinzelungstrommel 3 beaufschlagt werden. Aufgrund dieser Druckdifferenz lagern sich an den Perforationen 6 der Perforationsreihen der Vereinzelungstrommel 3, wenn diese durch den Saatgutvorrat 10, der sich aufgrund der Führung des Saatgutschaftes bis unterhalb der Drehachse 11 der Trommel 3 erstreckt, Samenkörner an. Der Saatgutvorratsbehälter 1 bzw. das Gehäuse 2 unterhalb des Saatgutvorratsbehälters 1, in dem die Vereinzelungstrommel 3 drehend und abdichtend gelagert ist, weist die einander beabstandeten Seitenwände 12 auf, die sich parallel zur Bewegungsrichtung 13 der Trommel 3 erstrecken und mit der Trommel 3 zumindest annähernd abdichtend zusammenwirken.

In Drehrichtung 13 gesehen ist oberhalb des Saatgutvorrates die die Abstreiferelemente 14, aufweisende Abstreifervorrichtung 15 angeordnet. Jeder Perforationsreihe 6 ist ein Abstreiferelement 14 zugeordnet. Im oberen Bereich der Vereinzelungstrommel 3 ist auf der Innenseite 8 ein die Druckdifferenz, an den die Perforationen der Perforationsreihen 6 anliegt, unterbrechendes Element 16 angeordnet. Hieran anschließend sind auf der Außenseite 9 der Trommel 3 den Perforationsreihen 6 zugeordnete Ausbringleitungen 17 der Saatgutleitungen 18 zugeordnet, über welche die sich von den Perforationen 6 lösenden vereinzelten Saatkörner auffangen und durch den in den Leitungen 17 herrschenden Luftstrom zu den als Säscharen ausgebildeten und nicht dargestellten Ausbringelementen geführt werden.

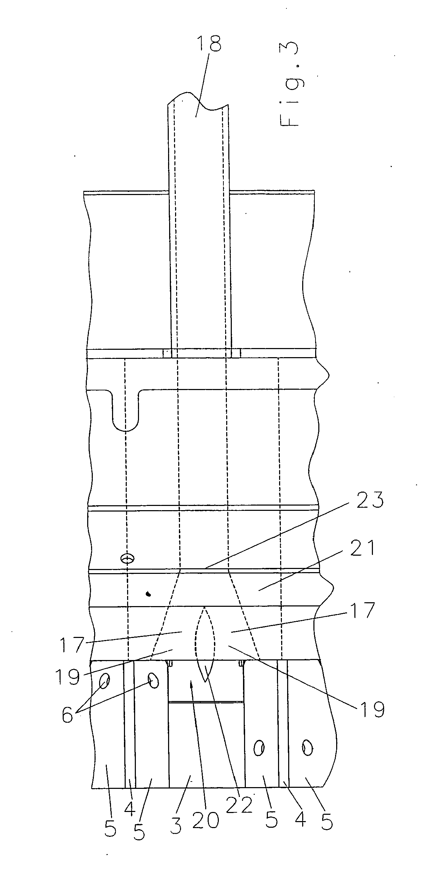

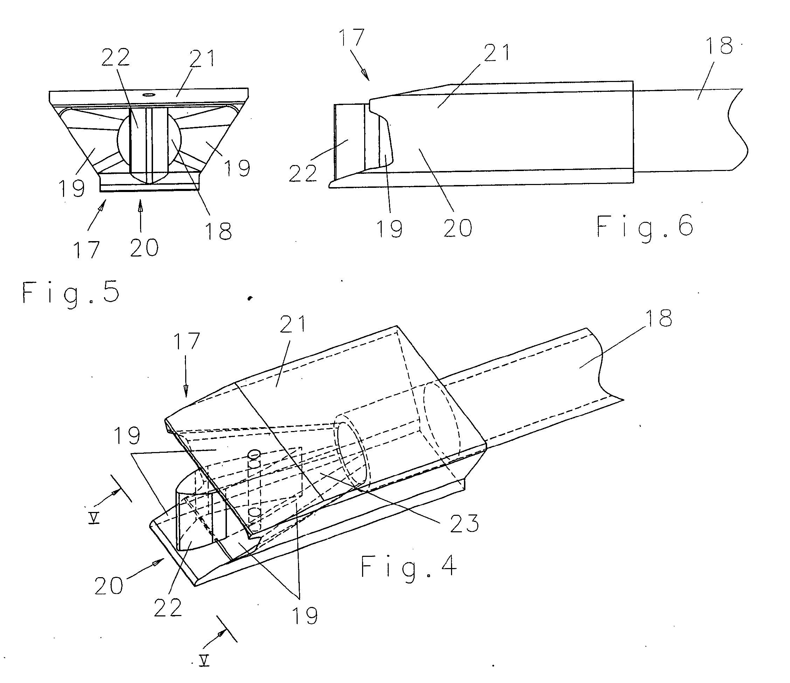

Die Eingangsbereiche 19 der Ausbringleitung 17 sind trichterförmig und Y-förmig ausgebildet. Die trichterförmigen Eingangsbereiche 19 sind zwischen den einzelnen Vereinzelungsgürteln 4 angeordnet und zwar derart, dass sie jeweils die sich von den Perforation 6 einander gegenüberliegenden Seitenflächen 5 benachbarter Vereinzelungsgürtel 4 lösenden vereinzelten Samenkörner auffangen und in eine gemeinsame Ausbringleitung 18 übergeben. In dem Eingangsbereich 19 der Eingangstrichter 20 ist ein die Eingangstrichter in ein Y- oder hosenartiges Leitungselement 21 aufteilendes Wandstück 22 angeordnet, wie insbesondere Fig. 4 und 5 zeigen. Dieses Leitungsstück 21 vereinigt sich zu einer gemeinsamen Leitung 23 und mündet in eine gemeinsame Leitung 18. Die Eingangstrichter 20 der Ausbringleitung 17 reichen zumindest annähernd bis an die Seitenflächen 5 der Vereinzelungsgürtel 4 heran, wie insbesondere Fig. 3 zeigt. Die Ausrichtung der Wände der Einganstrichter 20 ist an die Abflugrichtung der Samenkörner von der Perforation 6 in Richtung der Ausbringleitung 17 angepasst. Wie bereits erwähnt ist an den Eingangstrichter 20, hosen - und Y-artigen Leitungsstück 21 die Saatgutleitung 18 angeschlossen.

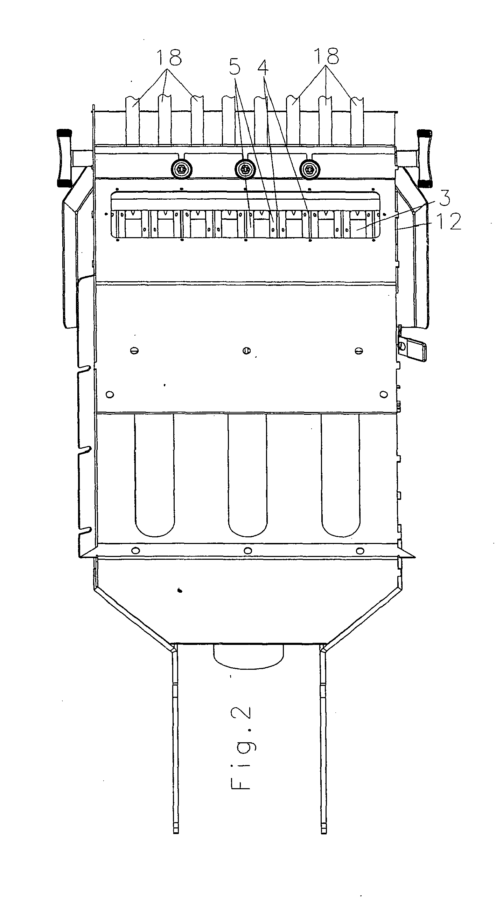

Die in den einander gegenüberliegenden Seitenflächen 5 benachbarter Vereinzelungsgürtel 4 angeordneter Perforationslöcher 6 sind versetzt zueinander angeordnet, wie der Fig. 2 und 3 zu entnehmen ist.

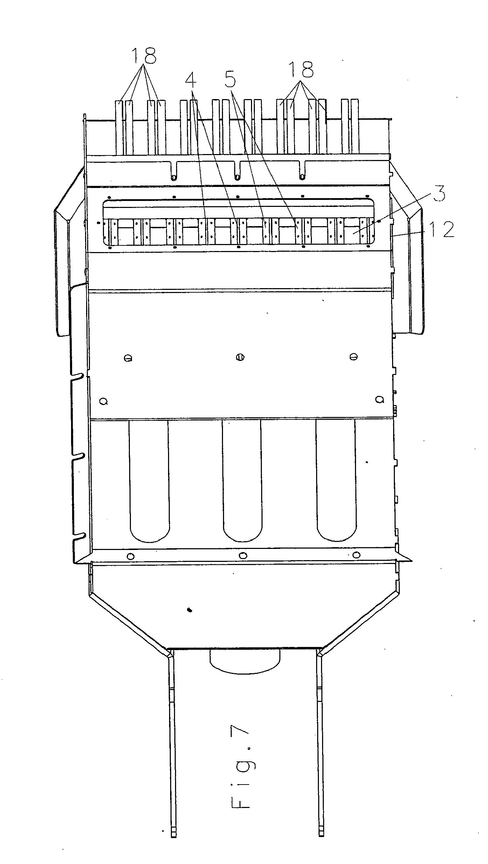

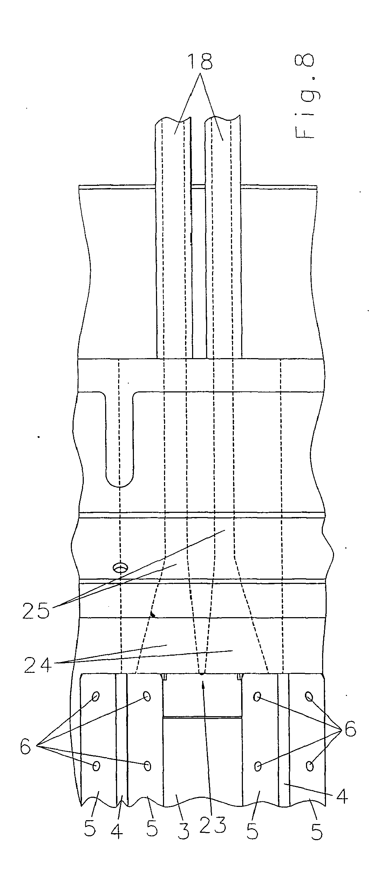

Die Ausgestaltung des Eingangsbereiches 23 gemäß dem Ausführungsbeispiel auf den Fig. 7 und 8 unterscheidet sich von den vorhergehenden Ausführungsbeispielen dadurch, dass jeder Eingangsbereich 23 des Eingangstrichters 24 jeweils einer Ausbringleitung 25 und einer Saatgutleitung 18 zugeordnet ist.

## Patentansprüche

1. Pneumatische Einzelkornsämaschine mit einem Saatgutvörratsbehälter und zumindest einer drehbar angeordneten Vereinzelungstrommel, in deren Umfangsfläche kreisförmig angeordnete Perforationsreihen angebracht sind, einem Gebläse, mittels welchem eine Druckdifferenz zwischen dem Innenraum der Vereinzelungstrommel und dem Außenbereich der Vereinzelungstrommel erzeugbar ist, so dass, wenn die Vereinzelungstrommel durch den Saatgutvorrat geführt wird, sich an den Perforationen der perforierten Trommel Samenkörner anlagern, wobei der Saatgutvorratsbehälter zwei von einander beabstandete Seitenwände aufweist, die sich parallel zur Bewegungsrichtung der Trommel erstrecken und mit der Trommel zumindest annähernd abdichtend zusammenwirken, wobei die Vereinzelungstrommel gegenüber der Trommeloberfläche im Bereich der Perforationsreihen erhöht ringförmig umlaufende Vereinzelungsgürtel aufweist, wobei die Vereinzelungsgürtel im Querschnitt dachförmig ausgebildet sind und in beiden Seitendachflächen die Perforationslöcher angeordnet sind, wobei von den Perforationslöchern der Trommel zur Ablageeinrichtung führende Ausbringleitungen vorgesehen sind, **dadurch gekennzeichnet, dass** der Eingangsbereich (19,23) der Ausbringleitungen (17,24,25) trichterförmig und/oder Y-förmig ausgebildet ist, dass die trichterförmigen und/oder Y-förmigen Eingangsbereiche (19,23) zwischen den Vereinzelungsgürteln (4) angeordnet sind und zwar derart, dass sie jeweils die sich von den Perforationen (6) der einander gegenüberliegenden Seitenflächen (5) benachbarter Vereinzelungsgürtel (4) lösenden vereinzelten Samenkörner auffangen und in die jeweilige und/oder gemeinsame Ausbringleitung (17,24,25) übergeben.

2. Einzelkornsämaschine nach Anspruch 1, **dadurch gekennzeichnet, dass** die trichterförmigen Eingangsbereiche (19) als Eingangstrichter ausgebildet sind.

3. Einzelkornsämaschine nach Anspruch 2, **dadurch gekennzeichnet, dass** jedem Eingangstrichter (24) eine Ausbringleitung (18) zugeordnet ist

4. Einzelkornsämaschine nach Anspruch 2, **dadurch gekennzeichnet, dass** in dem Eingangsbereich (19) der Eingangstrichter (20) ein die Eingangstrichter (20) in ein Y-förmiges oder hosenartiges Leitungselement aufteilendes Wandstück (22) angeordnet ist, dass dieses Leitungsstück (20) sich zu einer gemeinsamen Leitung (20) vereinigt und/oder in eine gemeinsame Leitung (18) einmündet.

5. Einzelkörnsämaschine nach einem oder mehreren der vorstehenden Ansprüche, **dadurch gekennzeichnet, dass** die Eingangstrichter (20) der Ausbringleitungen zumindest annähernd bis an die Seitenflächen (5) der Vereinzelungsgürtel (4) heranreichen.

6. Einzelkornsämaschine nach einem oder mehreren der vorstehenden Ansprüche, **dadurch gekennzeichnet, dass** die Ausrichtung der Wände der Eingangstrichter (20) an die Abflugrichtung der Samenkörner von den Perforationen (6) in Richtung der Ausbringleitungen (13,18) angepasst ist.

7. Einzelkornsämaschine nach einem oder mehreren der vorstehenden Ansprüche, **dadurch gekennzeichnet, dass** an dem eingangstrichter-, hosen- und/oder Y-artigen Leitungsstück (21) die Ausbringleitung (18) angeschlossen ist.

8. Einzelkornsämaschine nach einem oder mehreren der vor stehenden Ansprüche, **dadurch gekennzeichnet, dass** die in den einander gegenüberliegenden Seitenflächen (5) benachbarter Vereinzelungsgürtel (4) angeordneten Perforationslöcher (6) versetzt zueinander angeordnet sind
